# EUROPEAN PATENT APPLICATION

(11) **EP 0 993 228 A2**
(43) Date of publication of application: **12.04.2000**
(21) Application number: 99500165.8
(22) Date of filing: 17.09.1999
(51) Int. Cl.: H04Q 11/04

(54) **Integrated circuit for the access interface with the local telephone network**

(30) Priority: 17.09.1998 ES 9801954
(71) Applicant: Telefonica, S.A., 28013 Madrid (ES)
(72) Inventor: Calvo Torre,Fermin./Telefonica,S.A., 28028 Madrid (ES); Pena Melian,Jesus / Telefonica,S.A., 28028 Madrid, (ES); Conesa Lareo, Jose / Telefonica,S.A., 28028 Madrid. (ES)
(74) Representative: Carpintero Lopez, Francisco

(57) **Abstract**

An integrated circuit for the access interface with the local telephone network, of digital type, finding application in telephone communication systems, being employable as intervening element between external modules and the local network internal to the system, is structured so that it incorporates a central control unit (1) to perform internal tasks and control access to the bus (7) internal to the circuit; a controller (2) for access to the external bus (6); two statistical transmitters (3) responsible for sending frames to the local network on indication from the central control unit (1); two statistical receivers (4) for receiving frames from the local network and storing them in an external memory, and a PCM switching matrix (5) which intercommunicates with the central control unit (1) with respect to instructions and responses.

## Description

### Object of the Invention

The present invention refers to an integrated circuit for the access interface with the local telephone network. More specifically, the invention determines a digital integrated circuit, capable of application as the access interface to the local telephone network, in the modules constituting a telephone switching system.

The field of application of the invention lies within the communications sector and, more definitely, within the area of integrated communications controllers in telephone switching systems.

### Background to the Invention

Communications controllers, incorporated within telephone switching systems, which are known at the present time, have the distinctive characteristic of having been designed and structured for managing either statistical type links or PCM type links, but in no case to perform both tasks together.

The most favourable situation in practice would be to have available a communications controller device, for integrating into a telephone switching system, that is capable of carrying out the functions arising in both types of link, with all the benefits that this implies. To date, the existence of a controller combining both of the above mentioned functions is unknown.

Consequently, the main purpose of the present invention consists precisely in the development of an integrated circuit, the internal architecture of which has been structured so as to incorporate the necessary elements to enable both functions to be implemented together.

### Brief Description of the Invention

The integrated circuit proposed by the invention, comprises a digital circuit, capable of serving as access interfacing means with a local network (e.g. of the ETHERNET type), on the part of the modules pertaining to a telephone switching network. The local network mentioned is configured as per the following characteristics: it has a bus topology, employs synchronous transmission, includes a multiple access system with collision avoidance, has link control type HDLC, and has di-bit interpolation for internal synchronising adaptation.

Consequently the integrated circuit so defined constitutes an intervening element between the modules external to it and the local network internal to the system. The integrated circuit of the invention, according to its conception, incorporates the following elements:
- 1 central control unit
- 1 access controller for external bus
- 2 statistical transmitters
- 2 statistical receivers
- 1 PCM switching matrix.

Each of these elements performs a predetermined function, as is explained here below. Thus, the central control unit serves to carry out the internal tasks of the circuit, it being possible that the instructions for such tasks be received from modules external to the circuit, or from the other internal elements of the circuit; in addition, it is responsible for managing access to the internal bus of the integrated circuit. Insofar as the access controller to the external bus is concerned, the said access controller serves to manage orderly access to said bus by the elements belonging to the circuit, and by the modules external to it. For their part, the two statistical transmitters serve to send frames (which are stored in external buffers), to the local network, after receiving the pertinent instruction from the aforementioned central control unit. The statistical receivers, in complementary fashion to the transmitters, serve for receiving the frames coming from the local network, and store them in external memory obtained on request from the central controller already mentioned. Finally, the PCM switching matrix, comprises three PCM trunks, two of which are connected to the local network, and the third is connected to a module external to the circuit.

### Brief Description of the Figures

Other characteristics and benefits of the invention shall become clear from the following detailed description of a preferential embodiment of the invention, to be taken as an example by way of illustration and not limitation, with reference being made to the drawings attached hereto, in which:

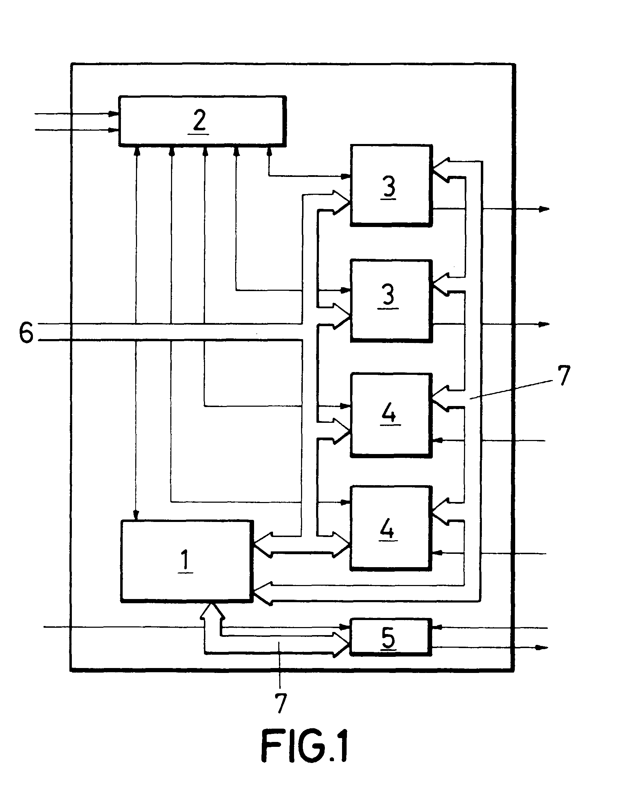

Figure 1, or Sole Figure, shows a schematic of a block diagram of the integrated circuit of the present invention.

### Description of a Preferential Embodiment of the Invention

As has been stated in the foregoing, the detailed description of the preferential embodiment shall be made considering the example of Figure 1 of the drawings, in which block diagram is shown, schematically, the internal architecture of the circuit implemented by the present invention. Thus, there is a central control unit (1), an external bus access controller (2), two statistical transmitters (3), two statistical receivers (4), and a PCM switching matrix (5), all of the foregoing elements appearing interconnected to each other by means of buses and suitable connecting lines. As has been expressed above, the integrated circuit has been designed to work on predetermined local networks, preferably of the ETHERNET type (bus topology and synchronous mode transmission), pertaining to telephone switching systems, and so that the circuit mentioned constitutes the access interface with internal local networks of said systems, employing multiple access techniques with collision avoidance and di-bit interpolation, for the purpose of adapting the frames to the internal synchronisation.

Moreover, the circuit has two clearly differentiated buses, as can be seen from Figure 1 mentioned above, having reference numbers (6 and 7), of which bus (6) is managed by the access controller (2), while the other bus (7), constituting the circuit internal bus, is managed by the central control unit (1).

The central control unit (1) carries out the internal tasks of the circuit and controls orderly access to the internal bus (7) of the elements belonging to it. Instructions for such tasks can originate in modules external to the circuit, or in its internal elements. The central control unit (1) is, preferentially, of the micro-programmed type, stored in a dedicated internal ROM. Among the tasks it performs, are those compromising frame transmission, allocation of PCM channels, link configuration, buffer requests, and others of similar nature.

For its part, the access controller (2) for external bus (6) performs the function of managing orderly access to said bus, both by internal and external elements.

The statistical transmitters (3) perform the function of sending frames to the local network, after receiving the obligatory command to transmit from the central control unit (1). The content to be transmitted is drawn from an external communications buffer, supervised and, depending on the state of the link, sent to the local network, the transmission statistics being stored in an external data storage area obtained by the central control unit (1). Preferentially such transmitters gain access to the local network with open collector TTL levels at a predetermined signalling rate (e.g. 2048 kbit/s), using multiple access techniques with collision avoidance, and with di-bit interpolation to adapt the frame to internal synchronisation.

The statistical receivers (4) receive the frames coming from the local network, storing the content in areas of an external communications memory which are obtained by the central control unit (1). The receiver (4) polls the line until it detects a frame start, carries out frame supervision, and generates statistics related with reception, storing these in an external data storage area. Connection to the local network is made preferentially through open collector TTL levels at a predetermined signalling rate (e.g. 2048 kbit/s), in synchronism with the group clock.

The PCM switching matrix (5) is linked internally, at command and response level, with the central control unit (1), and has three PCM trunks, two of which are connected to the local network and the third to a unit external to the circuit. Among the tasks it undertakes are comprised those of channel switching from incoming to outgoing trunks, setting any channel to open-collector state, reading the content of any channel, and others of a like nature.

In the foregoing a description has been provided of a preferred embodiment of the object of the present invention, sufficient for an expert in the matter to be able to understand its scope and the benefits ensuing therefrom, as well as to implement the practical embodiment of its object.

Nonetheless, and given that it concerns solely one preferred form of embodiment, it remains clear that within its essential nature multiple variations in detail can be introduced, without this implying separation from the content of the invention, which is limited only by the scope of the claims which follow.

## Claims

1. Integrated circuit for the access interface with the local telephone network, particularly of the digital type, belonging to telephone switching systems, intended for controlling communications between the modules pertaining to the system through its own internal local network, incorporating together incoming/outgoing statistical links and PCM type links, which is characterised in that its internal architecture has been structured so that it incorporates a set of elements consisting, preferentially, of a central control unit (1), an external bus access controller (2), two statistical transmitters (3), two statistical receivers (4) and a PCM switching matrix (5), suitably interconnected to each other, as well as an external bus (6) managed by the access controller (2) and a bus (7) internal to the circuit, managed by the central control unit (1) mentioned.

2. Integrated circuit, in accordance with claim 1, characterised in that it is in association with a network of predetermined characteristics (e.g. of the ETHERNET type), having bus topology, synchronous transmission, and di-bit interpolation for adapting internal synchronisation, in which said central controller (1), which is micro-programmed, performs tasks internal to the circuit and the access control for the internal bus (7); said access controller (2) for the external bus performing the function of managing the orderly access to said bus; the statistical transmitters (3) send frames to the local network on indication from the central control unit (1); the statistical receivers (4) receive frames from the local network and store them in an external memory obtained through the central control unit (1), and the PCM switching matrix (5) is linked up, at command and response level, with the central control unit (1).
